# EUROPÄISCHE PATENTSCHRIFT

(11) **EP 3 785 509 B1**
(45) Veröffentlichungstag und Bekanntmachung des Hinweises auf die Patenterteilung: **16.11.2022**
(21) Anmeldenummer: 20190399.4
(22) Anmeldetag: 11.08.2020
(51) Int. Cl.: A01C 7/08, A01C 15/00, A01C 15/04

(54) **VORRATSBEHÄLTER MIT INTEGRIERTER ANSAUGÖFFNUNGSSTRUKTUR FÜR EINE STRÖMUNGSERZEUGUNGSEINRICHTUNG**
RESERVOIR WITH INTEGRATED SUCTION OPENING STRUCTURE FOR A FLOW GENERATING DEVICE
RÉSERVOIR À STRUCTURE D'OUVERTURE D'ASPIRATION INTÉGRÉE POUR UN DISPOSITIF DE GÉNÉRATION D'ÉCOULEMENT

(30) Priorität: 27.08.2019 DE 102019122916
(43) Veröffentlichungstag der Anmeldung: 03.03.2021
(73) Patentinhaber: Horsch Maschinen GmbH, 92421 Schwandorf (DE)
(72) Erfinder: KNIFKE, Christian, 92421 Schwandorf (DE); HASELHOFF, Alexander, 92421 Schwandorf (DE)
(74) Vertreter: v. Bezold & Partner Patentanwälte - PartG mbB

(56) Entgegenhaltungen:
- EP-A1- 0 781 504
- WO-A1-2013/130005
- DE-A1-102009 014 170
- DE-A1-102016 102 376
- US-A- 4 758 119

## Beschreibung

Die Erfindung betrifft eine landwirtschaftliche Verteilmaschine zum Verteilen eines vorzugsweise granulartigen Verteilguts, z. B. eine pneumatische Sämaschine, insbesondere eine Sämaschine zur Drillsaat und/oder Einzelkornsaat.

DE 10 2009 014 170 A1 offenbart eine pneumatische Verteilmaschine mit zwei beabstandet hintereinander angeordneten Vorratsbehältern und/oder Vorratsbehältereinheiten und zumindest einem in dem Raum zwischen den beiden hintereinander angeordneten Vorratsbehältern und/oder Vorratsbehältereinheiten angeordneten Gebläse. Um die Geräuschemissionen, die von dem Gebläse einer pneumatischen Verteilmaschine ausgehen, in einfacher Weise für die Umwelt zu reduzieren, ist vorgesehen, dass zumindest die Bereiche des Raumes, in dem das Gebläse angeordnet ist, zwischen den Vorratsbehältern und/oder Vorratsbehältereinheiten, die nicht von den Wandungen der Vorratsbehälter und/oder Vorratsbehältereinheiten abgeschirmt werden, durch Abschirmelemente zumindest teilweise in abkapselnder Weise verschlossen sind. EP 2 819 499 A1 offenbart ein landwirtschaftliches Gerät, das dafür konfiguriert ist, durch ein Zugfahrzeug gezogen oder getragen zu werden, wobei das Gerät Folgendes umfasst: wenigstens einen Behälter für körniges oder pulverförmiges Material und wenigstens eine Zufuhreinrichtung zur luftstrombasierten Zufuhr des körnigen oder pulverförmigen Materials, wobei die Zufuhreinrichtung ein Gebläse umfasst, das ein Laufrad umfasst, das in einem Gebläsegehäuse untergebracht ist, wobei wenigstens ein Wandabschnitt des Gebläsegehäuses mit einem Wandabschnitt des Behälters integriert ist, wobei eine Einlasswand des Gebläsegehäuses mit einer Außenwand des Behälters integriert ist, und wobei eine Wand des Gebläsegehäuses gegenüber der Einlasswand mit einer Innenwand des Behälters integriert ist. Zum allgemeinen Stand der Technik kann auch noch auf die EP 0 781 504 A1 verwiesen werden.

WO 2017 055 266 A1 offenbart eine landwirtschaftliche Verteilmaschine zum Verteilen eines vorzugsweise granulartigen Verteilguts, insbesondere eine pneumatische Sämaschine zur Drillsaat. Die Verteilmaschine umfasst einen Vorratsbehälter zum Bevorraten des Verteilguts, eine Dosiervorrichtung zum Dosieren des Verteilguts und ein Gebläse zum Erzeugen einer Förderluftströmung zum Transportieren des durch die Dosiervorrichtung dosierten Verteilguts zu einem Verteilturm und vom Verteilturm zu einer Vielzahl an Säscharen.

Bei Gebläsen für landwirtschaftliche Verteilmaschinen besteht z. B. ein Problem darin, dass sie zur Erzielung eines möglichst großen Wirkungsgrads eine große Ansaugfläche benötigen, über die große Ansaugfläche allerdings im Einsatz der landwirtschaftlichen Verteilmaschine (insbesondere aufgewirbelte) Fremdpartikel (z. B. Staub, Schmutz, Bodenpartikel etc.) in die Gebläse eingesaugt werden können und die Gebläse dadurch beschädigt und/oder abgenutzt werden können. Der Nachteil besteht insbesondere bei sehr bodennah positionierten Gebläsen. Eine Lösung, um das Einsaugen von Fremdpartikeln in die Gebläse zu reduzieren, besteht darin, die Gebläse weit nach oben und somit weit beabstandet vom Boden zu positionieren. Nachteilig daran kann allerdings sein, dass deshalb stark gekrümmte Leitungen erforderlich sind, z. B. um die Gebläse mit den Dosiervorrichtungen zu verbinden, was mit einer Verschlechterung des Wirkungsgrads einhergeht. Nachteilig daran kann z. B. auch sein, dass die hohe Positionierung der Gebläse den Klappvorgang der landwirtschaftlichen Verteilmaschine in eine Transportposition zur Verringerung der Breite der landwirtschaftlichen Verteilmaschine beeinträchtigen kann.

Eine Aufgabe der Erfindung ist es, eine verbesserte und/oder alternative landwirtschaftliche Verteilmaschine zu schaffen, insbesondere eine landwirtschaftliche Verteilmaschine mit hohem Wirkungsgrad und/oder mit einer langlebigen Strömungserzeugungseinrichtung.

Diese Aufgabe kann mit den Merkmalen des Hauptanspruchs gelöst werden. Vorteilhafte Weiterbildungen sind in den Unteransprüchen offenbart oder ergeben sich aus der folgenden Beschreibung bevorzugter Ausführungsformen der Erfindung.

Die Erfindung betrifft eine landwirtschaftliche Verteilmaschine zum Verteilen eines z. B. granulartigen Verteilguts (z. B. Saatgut, Dünger etc.), vorzugsweise eine insbesondere pneumatische Sämaschine z. B. zur Drillsaat und/oder Einzelkornsaat.

Die landwirtschaftliche Verteilmaschine umfasst einen Vorratsbehälter für das Verteilgut, insbesondere zum Bevorraten des Verteilguts.

Der Vorratsbehälter kann z. B. einen (insbesondere oberen) Dachabschnitt und einen (insbesondere unteren) Bodenabschnitt umfassen.

Der Vorratsbehälter kann z. B. einen (insbesondere stirnseitigen) Vorderwandabschnitt umfassen.

Der Vorratsbehälter kann z. B. zwei Seitenwandabschnitte und/oder vorzugsweise einen (insbesondere hinteren, stirnseitigen) Rückwandabschnitt umfassen.

Die landwirtschaftliche Verteilmaschine umfasst zumindest eine Dosiervorrichtung (z. B. zum volumetrischen Dosieren des Verteilguts oder zum Vereinzeln des Verteilguts (insbesondere zur Kornvereinzelung)), und eine Strömungserzeugungseinrichtung (z. B. ein Gebläse, insbesondere ein Radialgebläse, ein Zentrifugalgebläse etc.).

Die Dosiervorrichtung kann z. B. zumindest eine Zellenradschleuse (zweckmäßig zum volumetrischen Dosieren des Verteilguts) oder zumindest eine Vereinzelungs-Vorrichtung zur Vereinzelung des Verteilguts (insbesondere Kornvereinzelung) umfassen.

Die Strömungserzeugungseinrichtung kann z. B. zum Erzeugen einer Förderluftströmung zum Transportieren des durch die Dosiervorrichtung dosierten Verteilguts oder z. B. zum Erzeugen eines Differenzdrucks zum Vereinzeln des Verteilguts dienen.

Die Strömungserzeugungseinrichtung kann z. B. unter dem Bodenabschnitt angeordnet sein, so dass vorzugsweise der Bodenabschnitt z. B. als Dach für die Strömungserzeugungseinrichtung dienen kann.

Die landwirtschaftliche Verteilmaschine zeichnet sich insbesondere dadurch aus, dass eine Ansaugöffnungsstruktur für die Strömungserzeugungseinrichtung in einem Außenwandabschnitt des Vorratsbehälters ausgebildet ist, vorzugsweise in einer Außenkontur (z. B. Außensilhouette) des Vorratsbehälters.

Dadurch kann vorzugsweise eine große Ansaugfläche für die Strömungserzeugungseinrichtung ermöglicht werden und/oder eine Verlagerung der Ansaugfläche nach vorne und/oder nach oben, so dass der Nachteil des Einsaugens von insbesondere im Einsatz der landwirtschaftlichen Verteilmaschine aufgewirbelten Fremdpartikeln zumindest reduziert werden kann.

Der zweckmäßig die Ansaugöffnungsstruktur aufweisende Außenwandabschnitt kann z. B. den Dachabschnitt, den Bodenabschnitt, den Vorderwandabschnitt und/oder zumindest einen Seitenwandabschnitt umfassen.

Der Außenwandabschnitt kann z. B. den Dachabschnitt umfassen, so dass die Ansaugöffnungsstruktur zweckmäßig zumindest abschnittsweise in dem Dachabschnitt ausgebildet sein kann.

Der Außenwandabschnitt kann z. B. den Vorderwandabschnitt umfassen, so dass die Ansaugöffnungsstruktur zweckmäßig zumindest abschnittsweise in dem Vorderwandabschnitt ausgebildet sein kann. Der Vorderwandabschnitt kann sich z. B. (vorzugsweise im Wesentlichen schräg) nach vorne oben erstrecken.

Der Außenwandabschnitt kann z. B. zumindest einen Seitenwandabschnitt umfassen, so dass die Ansaugöffnungsstruktur zweckmäßig zumindest abschnittsweise in zumindest einem der Seitenwandabschnitte ausgebildet sein kann.

Dadurch sind vorzugsweise auch Ausführungsformen umfasst, bei denen die Ansaugöffnungsstruktur z. B. in (z. B. gekrümmten oder abgeschrägten) Übergangsbereichen zwischen dem Dachabschnitt, dem Vorderwandabschnitt und/oder zumindest einem der Seitenwandabschnitte ausgebildet ist.

Der Außenwandabschnitt bildet vorzugsweise eine Außenkontur des Vorratsbehälters.

Der Bodenabschnitt kann einen vorderen im Wesentlichen schräg nach hinten unten geneigten Teilbereich aufweisen und/oder einen hinteren im Wesentlichen schräg nach hinten oben geneigten Teilbereich umfassen.

Der geneigte Teilbereich kann z. B. um zumindest 30° relativ zur Horizontalen geneigt sein und/oder ausgebildet sein, um an seiner Innenfläche Verteilgut nach unten hin zur Dosiervorrichtung zu leiten. Dadurch kann z. B. das Verteilgut Schwerkraft-basiert oder zumindest Schwerkraft-unterstützt zur Dosiervorrichtung gefördert werden.

Die Ansaugöffnungsstruktur kann vorzugsweise vorne und/oder oben am Vorratsbehälter ausgebildet sein.

Die Ansaugöffnungsstruktur kann zumindest abschnittsweise in einem (z. B. die ersten 100cm, die ersten 75cm oder die ersten 50cm umfassenden) vorderen Teilbereich des Dachabschnitts ausgebildet sein, zumindest abschnittsweise in einem (z. B. die ersten 100cm, die ersten 75cm oder die ersten 50cm umfassenden) oberen Teilbereich des Vorderwandabschnitts ausgebildet sein, und/oder zumindest abschnittsweise in einem (z. B. die ersten 100cm, die ersten 75cm oder die ersten 50cm umfassenden) vorderen und vorzugsweise (z. B. die ersten 100cm, die ersten 75cm oder die ersten 50cm umfassenden) oberen Teilbereich des zumindest einen Seitenwandabschnitts ausgebildet sein, was z. B. insbesondere deshalb vorteilhaft sein kann, weil dort während des Betriebs der landwirtschaftlichen Verteilmaschine in der Regel keine oder relativ wenig (üblicherweise vom Acker) aufgewirbelte Fremdpartikel (z. B. Staub, Schmutz, Ackerpartikel etc.) vorhanden sind und folglich die Gefahr, dass aufgewirbelte Fremdpartikel über die Ansauglauft in die Strömungserzeugungseinrichtung gelangen, reduziert werden kann.

Der Bodenabschnitt kann einen vorderen im Wesentlichen schräg nach hinten unten geneigten Teilbereich aufweisen und/oder einen hinteren im Wesentlichen schräg nach hinten oben geneigten Teilbereich umfassen.

Die Strömungserzeugungseinrichtung, insbesondere deren Einlassbereich, ist über einen Ansaugkanal (z. B. eine Ansaugkammer, Ansaugleitung, Ansaugrohr, Ansaugschlauch etc.) mit der Ansaugöffnungsstruktur verbunden.

Der Ansaugkanal kann z. B. zweckmäßig durch die Ansaugöffnungsstruktur mit Ansaugluft für die Strömungserzeugungseinrichtung versorgt werden.

Die Strömungserzeugungseinrichtung, z. B. deren Gehäuse, kann einen Einlassbereich für die Ansaugluft umfassen.

Der Einlassbereich kann zweckmäßig über den Ansaugkanal mit der Ansaugöffnungsstruktur verbunden sein.

Die Ansaugöffnungsstruktur weist einen Öffnungsquerschnitt auf und der Einlassbereich der Strömungserzeugungseinrichtung weist einen Öffnungsquerschnitt auf. Der Öffnungsquerschnitt der Ansaugöffnungsstruktur ist um zumindest den Faktor 1,5, um zumindest den Faktor 2, oder um zumindest den Faktor 3 größer als der Öffnungsquerschnitt des Einlassbereichs.

Es ist möglich, dass der Ansaugkanal insbesondere innenseitig entlang des Vorderwandabschnitts des Vorratsbehälters verläuft. Alternativ oder ergänzend kann der Ansaugkanal z. B. innerhalb einer Außenkontur des Vorratsbehälters verlaufen.

Der Ansaugkanal kann sich z. B. hin zur Strömungserzeugungseinrichtung, insbesondere deren Einlassbereich, verjüngen, vorzugsweise um eine Beschleunigung der Ansaugluft hin zur Strömungserzeugungseinrichtung zu ermöglichen.

Der Vorratsbehälter kann z. B. einen Aufnahmebereich zur Bevorratung des Verteilguts aufweisen.

Der Aufnahmebereich ist vorzugsweise durch eine zweckmäßig in den Vorratsbehälter integrierte Trennwand vom Ansaugkanal und/oder von der Ansaugöffnungsstruktur separiert, vorzugsweise im Wesentlichen Druck- und/oder Luft-dicht.

Es ist möglich, dass der Dachabschnitt sich über dem Aufnahmebereich und/oder über dem Ansaugkanal erstreckt, um vorzugsweise als Dach oder Deckel für den Aufnahmebereich und/oder den Ansaugkanal zu dienen.

Der Vorratsbehälter kann im Bereich der Ansaugöffnungsstruktur in Breitenrichtung der landwirtschaftlichen Verteilmaschine eine Gesamtbreite aufweisen, wobei die Ansaugöffnungsstruktur sich über zumindest 50%, zumindest 75% oder zumindest 90% der Gesamtbreite oder über im Wesentlichen die vollständige Gesamtbreite erstrecken kann.

Die Strömungserzeugungseinrichtung kann z. B. hinter dem Vorderwandabschnitt angeordnet sein und/oder außerhalb des Vorratsbehälters und insbesondere unter dem geneigten Teilbereich des Bodenabschnitts angeordnet sein.

Die Dosiervorrichtung kann z. B. hinter dem Vorderwandabschnitt angeordnet sein und/oder außerhalb des Vorratsbehälters angeordnet sein.

Die Strömungserzeugungseinrichtung und/oder die Dosiervorrichtung kann z. B. unter dem Bodenabschnitt angeordnet sein.

Die Strömungserzeugungseinrichtung kann z. B. einen Auslassbereich zur Ausgabe der Förderluftströmung aufweisen, wobei der Auslassbereich z. B. außerhalb des Vorratsbehälters und insbesondere unter dem geneigten Teilbereich des Bodenabschnitts positioniert sein kann.

Die Strömungserzeugungseinrichtung kann mittels einer Förderluftleitung mit der Dosiervorrichtung verbunden sein.

Die Förderluftleitung ist vorzugsweise hin zur Dosiervorrichtung nach unten geneigt und/oder über zwischen der Strömungserzeugungseinrichtung und der Dosiervorrichtung über ihre im Wesentlichen gesamte Längserstreckung im Wesentlichen geradlinig ausgebildet.

Die Förderluftleitung kann zur Aufnahme des durch die Dosiervorrichtung dosierten Verteilguts sich insbesondere unten an der Dosiervorrichtung vorbei erstrecken.

Es ist möglich, dass der Bodenabschnitt, insbesondere der geneigte Teilbereich des Bodenabschnitts, als Dach für die Strömungserzeugungseinrichtung dient und somit zweckmäßig die Strömungserzeugungseinrichtung überragen kann.

Es ist möglich, dass in den Vorratsbehälter eine Rückseitenbeleuchtungseinrichtung integriert ist und vorzugsweise die Rückseitenbeleuchtungseinrichtung aus einer Außenkontur des Vorratsbehälters im Wesentlichen nicht hervorsteht. Die Rückseitenbeleuchtungseinrichtung kann (z. B. im Wesentlichen insgesamt) im Vorratsbehälter untergebracht sein. Die Rückseitenbeleuchtungseinrichtung kann z. B. mit ihrer Außenfläche im Wesentlichen bündig mit der Außenfläche des Vorratsbehälters ausgerichtet sein. Auch z. B. ein Staufach, insbesondere eine Schublade oder eine Kipp- oder Schwenklade, insbesondere zur Werkzeugablage oder zur temporären Aufnahme anderer Gegenstände, kann derart in den Vorratsbehälter integriert sein.

Die Beleuchtungseinrichtung dient vorzugsweise zum Ausleuchten einer rückwärtigen und/oder seitlichen Umgebung der landwirtschaftlichen Verteilmaschine und kann somit vorzugsweise eine Rückseiten- und/oder Seitenbeleuchtung darstellen.

Die Beleuchtungseinrichtung kann ihr Licht z. B. im Wesentlichen nach hinten abstrahlen, vorzugsweise um als Rückleuchte (z. B. Rückfahrleuchte und/oder Fahrtrichtungsanzeiger) für den Straßenverkehr zu dienen und/oder um die zurückgelegte und/oder mittels der landwirtschaftlichen Verteilmaschine bearbeitete (z. B. mit Verteilgut versorgte) Ackerfläche ausleuchten zu können.

Die Dosiervorrichtung kann vorzugsweise hinter dem Vorderwandabschnitt angeordnet sein.

Die Strömungserzeugungseinrichtung kann z. B. mittels einer (vorzugsweise unter dem Bodenabschnitt verlaufenden) Förderluftleitung mit der Dosiervorrichtung verbunden sein, um durch die Dosiervorrichtung dosiertes Verteilgut aufzunehmen und Förderluftstrom-unterstützt weiter zu transportieren.

Die landwirtschaftliche Verteilmaschine kann zumindest einen (einen zweckmäßig oberen oder unteren Verteilkopf) umfassenden Verteilturm zum Verteilen des durch die Dosiervorrichtung dosierten Verteilguts an eine Vielzahl an Säschare aufweisen.

Die Strömungserzeugungseinrichtung dient vorzugsweise zum Erzeugen der Förderluftströmung, um durch die Dosiervorrichtung dosiertes Verteilgut zu dem zumindest einen Verteilturm und von dem zumindest einen Verteilturm zu der Vielzahl an Säscharen zu transportieren.

Die Dosiervorrichtung kann z. B. ein Dosiergerät (insbesondere Zellenradschleuse) mit zumindest zwei unabhängig voneinander betreibbaren Zellenrotoren aufweisen.

Die Dosiervorrichtung kann auch z. B. zumindest zwei Dosiergeräte (insbesondere Zellenradschleusen) mit jeweils zumindest zwei unabhängig voneinander betreibbaren Zellenrotoren aufweisen.

Die zwei Zellenrotoren können z. B. im Wesentlichen koaxial zueinander angeordnet sein und/oder in einem gemeinsamen Dosiergerät-Gehäuse untergebracht sein.

Es ist aber auch möglich, dass die Dosiervorrichtung zumindest zwei Dosiergeräte (insbesondere Zellenradschleusen) mit jeweils zumindest einem Zellenrotor aufweist. Die Dosiergeräte, insbesondere deren Zellenrotoren, können vorzugsweise unabhängig voneinander betrieben werden.

Die zumindest zwei unabhängig voneinander betreibbaren Zellenrotoren können z. B. mit unterschiedlichen Drehzahlen und/oder unterschiedlichen Drehrichtungen betrieben werden.

Das oder die Dosiergeräte sind vorzugsweise Zellenradschleusen.

Im Kontext der Erfindung ist es z. B. möglich, dass die Ansaugöffnungsstruktur insbesondere im Außenwandabschnitt zumindest eine Ansaugöffnung umfasst und/oder durch z. B. ein oder mehrere Gitter- oder Löcherstrukturen (z. B. Perforierungen etc.) gebildet wird.

Die Ansaugöffnungsstruktur kann sich z. B. vom Dachabschnitt mittelbar oder unmittelbar in den Vorderwandabschnitt und/oder den zumindest einen Seitenwandabschnitt erstrecken.

Eine Integration der Ansaugöffnungsstruktur in den Außenwandabschnitt des Vorratsbehälters und/oder eine Integration des Ansaugkanals in den Vorratsbehälter ermöglicht z. B. vorteilhaft Bauraum außerhalb des Vorratsbehälters und alternativ oder ergänzend ein harmonisches und optisch ansprechendes Erscheinungsbild des Vorratsbehälters.

Zu erwähnen ist, dass die Strömungserzeugungseinrichtung z. B. eine Überdruck- oder Vakuum-Strömungserzeugungseinrichtung umfassen kann (z. B. ein Überdruckgebläse oder ein Vakuumgebläse).

Zu erwähnen ist noch, dass die Ansaugöffnungsstruktur vorzugsweise zum Ansaugen von Ansaugluft für die Strömungserzeugungseinrichtung dient.

Zu erwähnen ist des Weiteren, dass der Vorderwandabschnitt und/oder der Rückwandabschnitt sich vorzugsweise über dem Bodenabschnitt des Vorratsbehälters erstrecken kann und/oder steiler ausgerichtet sein kann als der Bodenabschnitt und/oder der Dachabschnitt. Alternativ oder ergänzend kann der Vorderwandabschnitt und/oder der Rückwandabschnitt sich z. B. stirnseitig zwischen dem Bodenabschnitt und dem Dachabschnitt und/oder vorzugsweise zwischen den zwei Seitenwandabschnitten erstrecken.

Es ist möglich, dass die Vorderwand und/oder die Rückwand an den Bodenabschnitt und/oder den Dachabschnitt anschließt.

Z. B. kann die Vorderwand an den vorderen geneigten Teilbereich des Bodenabschnitts anschließen und/oder die Rückwand an den hinteren geneigten Teilbereich des Bodenabschnitts anschließen.

Zu erwähnen ist des Weiteren, dass die landwirtschaftliche Verteilmaschine vorzugsweise ausgebildet ist, um von einem Antriebsfahrzeug (z. B. einem Traktor etc.) in Vorwärtsfahrtrichtung gezogen zu werden.

Die Dosiervorrichtung kann z. B. zur Vereinzelung des Verteilguts dienen. Alternativ oder ergänzend kann die Strömungserzeugungseinrichtung zum Erzeugen eines Differenzdrucks für die Vereinzelung des Verteilguts ausgeführt sein. Hierzu kann z. B. ein Überdruck oder ein Unterdruck (zweckmäßig Vakuum) genutzt werden.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der nachstehenden Beschreibung bevorzugter Ausführungsformen der Erfindung in Verbindung mit den beigefügten Figuren.
Figur 1 zeigt eine Seitenansicht eines Teils einer landwirtschaftlichen Verteilmaschine gemäß einer Ausführungsform der Erfindung, insbesondere einen Vorratsbehälter, eine Dosiervorrichtung und eine Strömungserzeugungseinrichtung,
Figur 2 zeigt eine perspektivische Ansicht des Vorratsbehälters der Figur 1,
Figur 3 zeigt eine perspektivische Ansicht einer landwirtschaftlichen Verteilmaschine gemäß einer Ausführungsform der Erfindung.

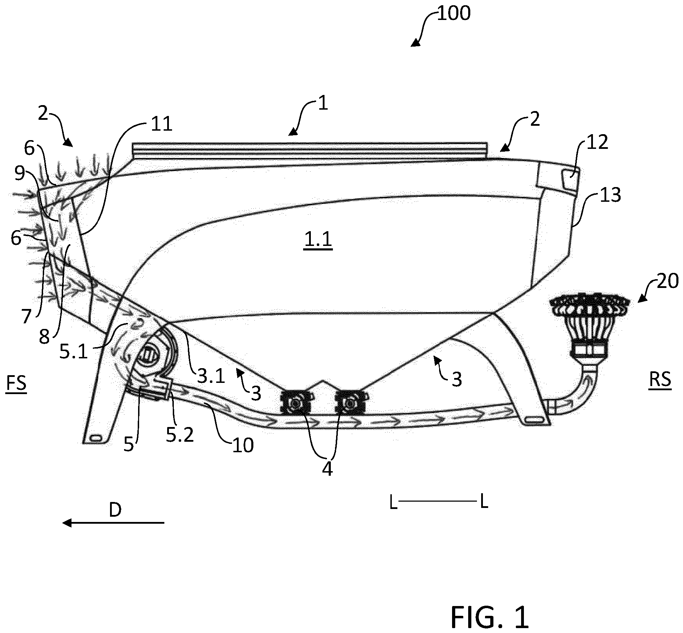

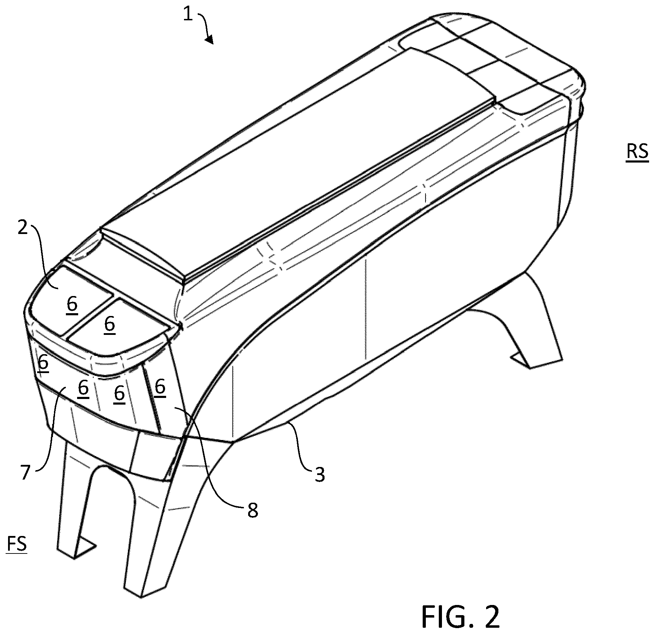

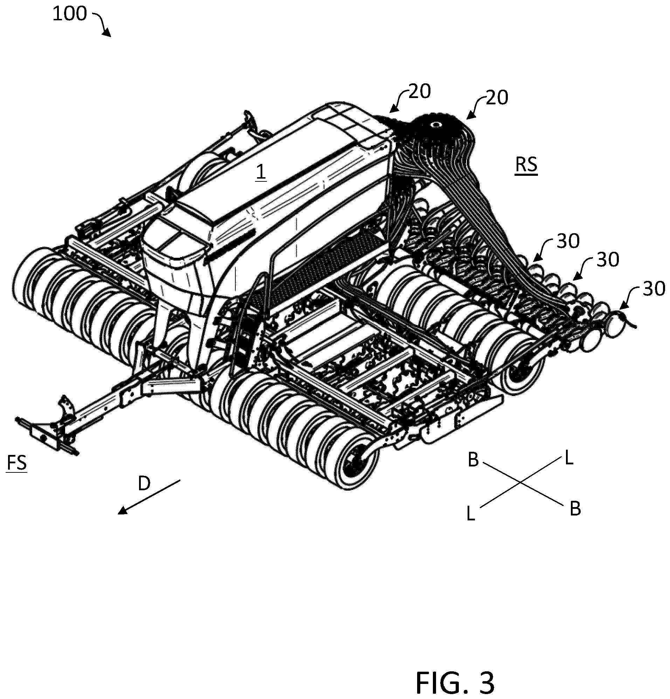

Figur 1 zeigt eine Seitenansicht eines Teils einer landwirtschaftlichen Verteilmaschine 100 zum Verteilen eines vorzugsweise granulartigen Verteilguts (z. B. Saatgut, Dünger etc.). Figur 1 zeigt insbesondere einen Vorratsbehälter 1 für das Verteilgut, eine Dosiervorrichtung 4 und eine Strömungserzeugungseinrichtung 5 (z. B. ein Gebläse, insbesondere ein Radial- oder Zentrifugalgebläse). Figur 2 zeigt eine perspektivische Ansicht des Vorratsbehälters 1 der Figur 1. Figur 3 zeigt eine perspektivische Ansicht der landwirtschaftlichen Verteilmaschine 100.

Die landwirtschaftliche Verteilmaschine 100 wird nachfolgend unter gemeinsamer Bezugnahme auf die Figuren 1 bis 3 beschrieben.

Bezugszeichen FS kennzeichnet die Vorderseite des Vorratsbehälters 1 und der landwirtschaftlichen Verteilmaschine 100.

Bezugszeichen RS kennzeichnet die Rück- und/oder Hinterseite des Vorratsbehälters 1 und der landwirtschaftlichen Verteilmaschine 100.

Bezugszeichen D kennzeichnet die Vorwärtsfahrtrichtung der landwirtschaftlichen Verteilmaschine 100.

Bezugszeichen B kennzeichnet die Breitenrichtung der landwirtschaftlichen Verteilmaschine 100.

Bezugszeichen L kennzeichnet die Längsrichtung der landwirtschaftlichen Verteilmaschine 100.

Die landwirtschaftliche Verteilmaschine 100 ist eine Sämaschine zur Drillsaat und ausgebildet, um von einem nicht gezeigten Antriebsfahrzeug (z. B. einem Traktor etc.) in Vorwärtsfahrtrichtung D gezogen zu werden.

Der Vorratsbehälter 1 umfasst einen oberen Dachabschnitt 2, einen unteren Bodenabschnitt 3, einen stirnseitigen Vorderwandabschnitt 7, zwei Seitenwandabschnitte 8 und einen Rückwandabschnitt 13.

Der Dachabschnitt 2, der Bodenabschnitt 3, der Vorderwandabschnitt 7, die zwei Seitenwandabschnitte 8 und der Rückwandabschnitt 13 stellen Außenwandabschnitte des Vorratsbehälters 1 dar und bilden zweckmäßig eine Außenkontur (z. B. Außensilhouette) des Vorratsbehälters 1.

Der Vorratsbehälter 1 weist insbesondere einen Aufnahmebereich 1.1 zur Bevorratung des Verteilguts auf.

Die Dosiervorrichtung 4 dient zum Dosieren des Verteilguts, wobei die Dosiervorrichtung 4 zwei als Zellenradschleuse ausgebildete Dosiergeräte zum volumetrischen Dosieren des Verteilguts umfasst.

Die Strömungserzeugungseinrichtung 5 ist unter dem Bodenabschnitt 3 ausgebildet und dient zur Erzeugung einer Förderluftströmung in einer Förderluftleitung 10. Die Förderluftströmung dient zum Transportieren des durch die Dosiervorrichtung 4 dosierten Verteilguts hin zu zwei Verteiltürmen 20 und von den zwei Verteiltürmen 20 zu einer Vielzahl an Säscharen 30. Es sind Ausführungsformen mit mehr oder weniger als zwei Verteiltürmen 20 möglich.

Eine Besonderheit ist, dass eine Ansaugöffnungsstruktur 6 zum Ansaugen von Ansaugluft für die Strömungserzeugungseinrichtung 5 in einem Außenwandabschnitt des Vorratsbehälters 1 ausgebildet ist, vorzugsweise in einer Außenkontur (z. B. Außensilhouette) des Vorratsbehälters 1.

Der die Ansaugöffnungsstruktur 6 aufweisende Außenwandabschnitt umfasst zweckmäßig den Dachabschnitt 2, kann zusätzlich aber auch z. B. den Vorderwandabschnitt 7 und/oder die zwei Seitenwandabschnitte 8 umfassen.

Folglich kann die Ansaugöffnungsstruktur 6 zweckmäßig ausgebildet sein in einem vorzugsweise vorderen Teilbereich des Dachabschnitts 2, einem vorzugsweise oberen Teilbereich des Vorderwandabschnitts 7 und in einem vorzugsweise vorderen, oberen Teilbereich beider Seitenwandabschnitte 8.

Der Bodenabschnitt 3 umfasst einen vorderen schräg nach hinten geneigten Teilbereich 3.1.

Die Strömungserzeugungseinrichtung 5 ist hinter dem Vorderwandabschnitt 7 angeordnet und zwar zweckmäßig unter dem geneigten Teilbereich 3.1. Der geneigte Teilbereich 3.1 ist um zumindest 30° relativ zur Horizontalen geneigt ist, um insbesondere ein Absinken des Verteilguts im Vorratsbehälter 1 zu oder in die Dosiervorrichtung 4 zu gewährleisten.

Die Strömungserzeugungseinrichtung 5 weist einen Einlassbereich 5.1 für die Ansaugluft und einen Auslassbereich 5.2 für die Förderluftströmung auf.

Die Strömungserzeugungseinrichtung 5 und zwar insbesondere der Einassbereich 5.1 ist über einen Ansaugkanal 9 mit der Ansaugöffnungsstruktur 6 verbunden ist. Die Luftströmung der Ansaugluft durch die Ansaugöffnungsstruktur 6 und den Ansaugkanal 9 ist in Figur 1 durch die Pfeile symbolisiert.

Der Ansaugkanal 9 erstreckt sich insbesondere entlang des Vorderwandabschnitts 7 und zwar innerhalb des Vorratsbehälters 1, insbesondere innerhalb der Außenkontur des Vorratsbehälters 1.

Der Ansaugkanal 9 erstreckt sich von dem die Ansaugöffnungsstruktur 6 aufweisenden Dachabschnitt 2 nach unten zu der Strömungserzeugungseinrichtung 5.

Der Ansaugkanal 6 kann sich optional hin zum Einlassbereich 5.1 der Strömungserzeugungseinrichtung 5 z. B. im Wesentlichen konisch verjüngen.

Der Ansaugkanal 9 und die Ansaugöffnungsstruktur 6 sind zweckmäßig über eine Trennwand 11 vorzugsweise im Wesentlichen luft- und/oder druckdicht vom Aufnahmebereich 1.1 und somit vom Verteilgut separiert.

Die Ansaugöffnungsstruktur 6 weist einen Öffnungsquerschnitt auf und der Einlassbereich 5.1 der Strömungserzeugungseinrichtung 5 weist einen Öffnungsquerschnitt auf.

Die in die Außenkontur des Vorratsbehälters 1 integrierte Ansaugöffnungsstruktur 6 ermöglicht eine große Ansaugfläche, so der Öffnungsquerschnitt der Ansaugöffnungsstruktur 6 um zumindest den Faktor 1,5, um zumindest den Faktor 2, oder sogar um zumindest den Faktor 3 größer sein kann als der Öffnungsquerschnitt des Einlassbereichs 5.1 der Strömungserzeugungseinrichtung 5.

Der Vorratsbehälter 1 kann im Bereich der Ansaugöffnungsstruktur 6 in Breitenrichtung B der landwirtschaftlichen Verteilmaschine 100 eine Gesamtbreite aufweisen. Die Ansaugöffnungsstruktur 6 kann sich über zumindest 50% der Gesamtbreite erstrecken, vorzugsweise über die im Wesentlichen gesamte Gesamtbreite.

Die Strömungserzeugungseinrichtung 5 ist mittels der Förderluftleitung 10 mit der Dosiervorrichtung 4 verbunden und erstreckt sich unten an den Dosiervorrichtung 4 vorbei hin zu den Verteiltürmen 20.

Die Strömungserzeugungseinrichtung 5 ist über dem Niveau der Dosiervorrichtung 4 angeordnet, so dass die Förderluftleitung 10 hin zur Dosiervorrichtung 4 nach unten geneigt ist.

Bevorzugt ist, wenn die Förderluftleitung 10 zwischen der Strömungserzeugungseinrichtung 5 (Auslassbereich 5.2) und der Dosiervorrichtung 4 über ihre im Wesentlichen gesamte Längserstreckung im Wesentlichen geradlinig verlaufen kann.

In den Vorratsbehälter 1 ist eine Rückseitenbeleuchtungseinrichtung 12 so integriert, so dass sie aus einer Außenkontur des Vorratsbehälters 1 nicht hervorsteht.

Zu erwähnen ist, dass die landwirtschaftliche Verteilmaschine auch eine Sämaschine zur Einzelkornsaat sein kann. Die Dosiervorrichtung kann dann z. B. zur Vereinzelung des Verteilguts, insbesondere zur Kornvereinzelung dienen. Die Strömungserzeugungseinrichtung kann dann zum Erzeugen eines (zweckmäßig Überdruck- oder Unterdruck-basierten) Differenzdrucks für die Vereinzelung des Verteilguts ausgeführt sein.

Die Erfindung ist nicht auf die oben beschriebenen bevorzugten Ausführungsformen beschränkt. Vielmehr ist eine Vielzahl von Varianten und Abwandlungen möglich, die ebenfalls in den Schutzbereich des Hauptanspruchs fallen.

Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Vorratsbehälter
- 2: Dachabschnitt
- 3: Bodenabschnitt
- 3.1: geneigter Teilbereich des Bodenabschnitts
- 4: Dosiervorrichtung, vorzugsweise zum volumetrischen Dosieren des Verteilguts oder zum Vereinzeln des Verteilguts
- 5: Strömungserzeugungseinrichtung, vorzugsweise Gebläse
- 5.1: Einlassbereich
- 5.2: Auslassbereich
- 6: Ansaugöffnungsstruktur
- 7: Vorderwandabschnitt
- 8: Seitenwandabschnitte
- 9: Ansaugkanal
- 10: Förderluftleitung
- 11: Trennwand
- 12: Rückseitenbeleuchtungseinrichtung
- 13: Rückwandabschnitt

- 100: Landwirtschaftliche Verteilmaschine, vorzugsweise Sämaschine
- 20: Verteilturm
- 30: Säschare

- B: Breitenrichtung der landwirtschaftlichen Verteilmaschine
- L: Längsrichtung der landwirtschaftlichen Verteilmaschine
- D: Vorwärtsfahrtrichtung der landwirtschaftlichen Verteilmaschine

- FS: Vorderseite des Vorratsbehälters und/oder der landwirtschaftlichen Verteilmaschine
- RS: Rück-/Hinterseite des Vorratsbehälters und/oder der landwirtschaftlichen Verteilmaschine

## Patentansprüche

1. Landwirtschaftliche Verteilmaschine (100) zum Verteilen eines Verteilguts, vorzugsweise Sämaschine, mit:
- einem Vorratsbehälter (1) für das Verteilgut, wobei der Vorratsbehälter (1) einen Dachabschnitt (2), einen Bodenabschnitt (3), einen Vorderwandabschnitt (7) und vorzugsweise zwei Seitenwandabschnitte (8) umfasst,
- einer Dosiervorrichtung (4) zum Dosieren des Verteilguts, und
- einer Strömungserzeugungseinrichtung (5), wobei
- eine Ansaugöffnungsstruktur (6) für die Strömungserzeugungseinrichtung (5) in einem Außenwandabschnitt des Vorratsbehälters (1) ausgebildet ist,
wobei
die Strömungserzeugungseinrichtung (5) mittels eines Ansaugkanals (9) mit der Ansaugöffnungsstruktur (6) verbunden ist, **dadurch gekennzeichnet, dass**
die Ansaugöffnungsstruktur (6) einen Öffnungsquerschnitt aufweist und die Strömungserzeugungseinrichtung (5) einen Einlassbereich (5.1) mit einem Öffnungsquerschnitt aufweist und der Öffnungsquerschnitt der Ansaugöffnungsstruktur (6) um zumindest den Faktor 1,5, um zumindest den Faktor 2, oder um zumindest den Faktor 3 größer ist als der Öffnungsquerschnitt des Einlassbereichs (5.1).

2. Landwirtschaftliche Verteilmaschine (100) nach Anspruch 1, **dadurch gekennzeichnet, dass** der Außenwandabschnitt den Dachabschnitt (2) umfasst, so dass die Ansaugöffnungsstruktur (6) zumindest abschnittsweise in dem Dachabschnitt (2) ausgebildet ist.

3. Landwirtschaftliche Verteilmaschine (100) nach Anspruch 1 oder 2, **dadurch gekennzeichnet, dass** der Außenwandabschnitt
- den Vorderwandabschnitt (7) umfasst, so dass die Ansaugöffnungsstruktur (6) zumindest abschnittsweise in dem Vorderwandabschnitt (7) ausgebildet ist, und/oder
- zumindest einen der Seitenwandabschnitt (8) umfasst, so dass die Ansaugöffnungsstruktur (6) zumindest abschnittsweise in zumindest einem der Seitenwandabschnitte (8) ausgebildet ist.

4. Landwirtschaftliche Verteilmaschine (100) nach einem der vorhergehenden Ansprüche, **dadurch gekennzeichnet, dass** der Außenwandabschnitt eine Außenkontur des Vorratsbehälters (1) bildet.

5. Landwirtschaftliche Verteilmaschine (100) nach einem der vorhergehenden Ansprüche, **dadurch gekennzeichnet, dass** der Bodenabschnitt (3) einen vorderen schräg nach hinten unten geneigten Teilbereich (3.1) aufweist und die Strömungserzeugungseinrichtung (5) unter dem geneigten Teilbereich (3.1) ausgebildet ist.

6. Landwirtschaftliche Verteilmaschine (100) nach Anspruch 5, **dadurch gekennzeichnet, dass** der geneigte Teilbereich (3.1) um zumindest 30° relativ zur Horizontalen geneigt ist und/oder ausgebildet ist, um an seiner Innenfläche Verteilgut nach unten hin zur Dosiervorrichtung (4) zu leiten.

7. Landwirtschaftliche Verteilmaschine (100) nach einem der vorhergehenden Ansprüche, **dadurch gekennzeichnet, dass** die Ansaugöffnungsstruktur (6)
- zumindest abschnittsweise in einem vorderen Teilbereich des Dachabschnitts (2) ausgebildet ist,
- zumindest abschnittsweise in einem oberen Teilbereich des Vorderwandabschnitts (7) ausgebildet ist, und/oder
- zumindest abschnittsweise in einem vorderen und oberen Teilbereich des zumindest einen Seitenwandabschnitts (8) ausgebildet ist.

8. Landwirtschaftliche Verteilmaschine (100) nach einem der vorhergehenden Ansprüche, **dadurch gekennzeichnet, dass** der Ansaugkanal (9)
- entlang des Vorderwandabschnitts (7) verläuft,
- sich hin zur Strömungserzeugungseinrichtung (5) verjüngt, und/oder
- innerhalb einer Außenkontur des Vorratsbehälters (1) verläuft.

9. Landwirtschaftliche Verteilmaschine (100) nach einem der vorhergehenden Ansprüche, **dadurch gekennzeichnet, dass** der Vorratsbehälter (1) einen Aufnahmebereich (1.1) zur Bevorratung des Verteilguts aufweist und der Aufnahmebereich (1.1) durch eine Trennwand (11) vom Ansaugkanal (9) und/oder von der Ansaugöffnungsstruktur (6) separiert ist.

10. Landwirtschaftliche Verteilmaschine (100) nach einem der vorhergehenden Ansprüche, **dadurch gekennzeichnet, dass** der Dachabschnitt (2) sich über dem Ansaugkanal (9) erstreckt und vorzugsweise über dem Aufnahmebereich (1.1) erstreckt.

11. Landwirtschaftliche Verteilmaschine (100) nach einem der vorhergehenden Ansprüche, **dadurch gekennzeichnet, dass** der Vorratsbehälter (1) im Bereich der Ansaugöffnungsstruktur (6) eine Gesamtbreite in Breitenrichtung (B) der landwirtschaftlichen Verteilmaschine (100) aufweist und die Ansaugöffnungsstruktur (6) sich über zumindest 50%, zumindest 75% oder zumindest 90% der Gesamtbreite erstreckt.

12. Landwirtschaftliche Verteilmaschine (100) nach einem der vorhergehenden Ansprüche, **dadurch gekennzeichnet, dass** die Dosiervorrichtung (4) und/oder die Strömungserzeugungseinrichtung (5)
- hinter dem Vorderwandabschnitt (7) angeordnet ist,
- außerhalb des Vorratsbehälters (1) angeordnet ist, und/oder
- unter dem Bodenabschnitt (3) angeordnet ist.

13. Landwirtschaftliche Verteilmaschine (100) nach einem der vorhergehenden Ansprüche, **dadurch gekennzeichnet, dass** in den Vorratsbehälter (1) eine Rückseitenbeleuchtungseinrichtung (12) integriert ist und vorzugsweise die Rückseitenbeleuchtungseinrichtung (12) aus einer Außenkontur des Vorratsbehälters (1) im Wesentlichen nicht hervorsteht.

14. Landwirtschaftliche Verteilmaschine (100) nach einem der vorhergehenden Ansprüche, **dadurch gekennzeichnet, dass** die Dosiervorrichtung (4) zumindest einen Zellenrotor zum volumetrischen Dosieren des Verteilguts aufweist und die Strömungserzeugungseinrichtung (5) mittels einer unter dem Bodenabschnitt (3) verlaufenden Förderluftleitung (10) mit der Dosiervorrichtung (4) verbunden ist, um durch die Dosiervorrichtung (4) dosiertes Verteilgut aufzunehmen und Förderluftstrom-unterstützt weiter zu transportieren.

15. Landwirtschaftliche Verteilmaschine (100) nach einem der vorhergehenden Ansprüche, **dadurch gekennzeichnet, dass** die landwirtschaftliche Verteilmaschine (100) zumindest einen Verteilturm (20) zum Verteilen des durch die Dosiervorrichtung (4) dosierten Verteilguts an eine Vielzahl an Säschare (30) aufweist und die Strömungserzeugungseinrichtung (5) zum Erzeugen einer Förderluftströmung ausgebildet ist, um durch die Dosiervorrichtung (4) dosiertes Verteilgut zu dem zumindest einen Verteilturm (20) und von dem zumindest einen Verteilturm (20) zu der Vielzahl an Säscharen (30) zu transportieren.

16. Landwirtschaftliche Verteilmaschine (100) nach einem der vorhergehenden Ansprüche, **dadurch gekennzeichnet, dass** die Dosiervorrichtung zur Vereinzelung des Verteilguts ausgebildet ist und die Strömungserzeugungseinrichtung (5) zum Erzeugen eines Differenzdrucks für die Vereinzelung des Verteilguts dient.

## Claims

1. An agricultural distribution machine (100) for distributing a distribution material, preferably a seeding machine, having:
- a reservoir (1) for the distribution material, wherein the reservoir (1) comprises a roof section (2), a floor section (3), a front wall section (7) and preferably two side wall sections (8),
- a metering device (4) for metering the distribution material, and
- a flow generating device (5), wherein
- a suction opening structure (6) for the flow generating device (5) is formed in an outer wall section of the reservoir (1), wherein
the flow generating device (5) is connected to the suction opening structure (6) by means of a suction channel (9), **characterized in that**
the suction opening structure (6) has an opening cross section and the flow generating device (5) has an inlet region (5.1) with an opening cross section, and the opening cross section of the suction opening structure (6) is larger than the opening cross section of the inlet region (5.1) by at least the factor 1.5, by at least the factor 2, or by at least the factor 3.

2. The agricultural distribution machine (100) according to Claim 1, **characterized in that** the outer wall section comprises the roof section (2), so that the suction opening structure (6) is at least partly formed in the roof section (2).

3. The agricultural distribution machine (100) according to Claim 1 or 2, **characterized in that** the outer wall section
- comprises the front wall section (7), so that the suction opening structure (6) is at least partly formed in the front wall section (7), and/or
- comprises at least one of the side wall sections (8), so that the suction opening structure (6) is at least partly formed in at least one of the side wall sections (8).

4. The agricultural distribution machine (100) according to one of the preceding claims, **characterized in that** the outer wall section forms an outer contour of the reservoir (1).

5. The agricultural distribution machine (100) according to one of the preceding claims, **characterized in that** the floor section (3) has a front sub-region (3.1) that is inclined obliquely towards the rear at the bottom, and the flow generating device (5) is formed under the inclined sub-region (3.1).

6. The agricultural distribution machine (100) according to Claim 5, **characterized in that** the inclined sub-region (3.1) is inclined by at least 30° relative to the horizontal and/or is designed to conduct distribution material on its inner surface downwards towards the metering device (4).

7. The agricultural distribution machine (100) according to one of the preceding claims, **characterized in that** the suction opening structure (6)
- is at least partly formed in a front sub-region of the roof section (2),
- is at least partly formed in an upper sub-region of the front wall section (7), and/or
- is at least partly formed in a front and upper sub-region of the at least one side wall section (8).

8. The agricultural distribution machine (100) according to one of the preceding claims, **characterized in that** the suction channel (9)
- runs along the front wall section (7),
- tapers towards the flow generating device (5), and/or
- runs inside an outer contour of the reservoir (1).

9. The agricultural distribution machine (100) according to one of the preceding claims, **characterized in that** the reservoir (1) has a holding region (1.1) for storing the distribution material, and the holding region (1.1) is separated from the suction channel (9) and/or from the suction opening structure (6) by a dividing wall (11).

10. The agricultural distribution machine (100) according to one of the preceding claims, **characterized in that** the roof section (2) extends over the suction channel (9) and preferably extends over the holding region (1.1).

11. The agricultural distribution machine (100) according to one of the preceding claims, **characterized in that** the reservoir (1) in the region of the suction opening structure (6) has an overall width in the width direction (B) of the agricultural distribution machine (100), and the suction opening structure (6) extends over at least 50%, at least 75% or at least 90% of the overall width.

12. The agricultural distribution machine (100) according to one of the preceding claims, **characterized in that** the metering device (4) and/or the flow generating device (5)
- is arranged behind the front wall section (7),
- is arranged outside the reservoir (1), and/or
- is arranged under the floor section (3).

13. The agricultural distribution machine (100) according to one of the preceding claims, **characterized in that** a rear-side lighting device (12) is integrated into the reservoir (1) and, preferably, the rear-side lighting device (12) does not project substantially out of an outer contour of the reservoir (1).

14. The agricultural distribution machine (100) according to one of the preceding claims, **characterized in that** the metering device (4) has at least one cell rotor for the volumetric metering of the distribution material, and the flow generating device (5) is connected to the metering device (4) by means of a conveying air line (10) running under the floor section (3), in order to pick up distribution material metered by the metering device (4) and to transport it onward with conveying air flow support.

15. The agricultural distribution machine (100) according to one of the preceding claims, **characterized in that** the agricultural distribution machine (100) has at least one distribution tower (20) for distributing the distribution material metered by the metering device (4) to a large number of seed coulters (30), and the flow generating device (5) is designed to generate a conveying air flow in order to transport distribution material metered by the metering device (4) to the at least one distribution tower (20) and from the at least one distribution tower (20) to the large number of seed coulters (30).

16. The agricultural distribution machine (100) according to one of the preceding claims, **characterized in that** the metering device is designed to singulate the distribution material, and the flow generating device (5) is used to generate a differential pressure for the singulation of the distribution material.

## Revendications

1. Machine de distribution agricole (100) pour la distribution d'un produit de distribution, de préférence une machine à semer, avec :
- un réservoir (1) pour le produit de distribution, dans laquelle le réservoir (1) comporte une section de toit (2), une section de fond (3), une section de paroi avant (7) et de préférence deux sections de paroi latérale (8),
- un dispositif de dosage (4) pour le dosage du produit de distribution, et
- un dispositif de génération d'écoulement (5), dans laquelle
- une structure d'ouverture d'aspiration (6) pour le dispositif de génération d'écoulement (5) est réalisée dans une section de paroi extérieure du réservoir (1),
dans laquelle le dispositif de génération d'écoulement (5) est relié au moyen d'un canal d'aspiration (9) à la structure d'ouverture d'aspiration (6), **caractérisée en ce que** la structure d'ouverture d'aspiration (6) présente une section transversale d'ouverture et le dispositif de génération d'écoulement (5) présente une zone d'entrée (5.1) avec une section transversale d'ouverture et la section transversale d'ouverture de la structure d'ouverture d'aspiration (6) est supérieure d'au moins le facteur 1,5, d'au moins le facteur 2, ou d'au moins le facteur 3 à la section transversale d'ouverture de la zone d'entrée (5.1).

2. Machine de distribution agricole (100) selon la revendication 1, **caractérisée en ce que** la section de paroi extérieure comporte la section de toit (2) de sorte que la structure d'ouverture d'aspiration (6) soit réalisée au moins par sections dans la section de toit (2).

3. Machine de distribution agricole (100) selon la revendication 1 ou 2, **caractérisée en ce que** la section de paroi extérieure
- comporte la section de paroi avant (7) de sorte que la structure d'ouverture d'aspiration (6) soit réalisée au moins par sections dans la section de paroi avant (7), et/ou
- comporte au moins une de la section de paroi latérale (8) de sorte que la structure d'ouverture d'aspiration (6) soit réalisée au moins par sections dans au moins une des sections de paroi latérale (8).

4. Machine de distribution agricole (100) selon l'une quelconque des revendications précédentes, **caractérisée en ce que** la section de paroi extérieure forme un contour extérieur du réservoir (1).

5. Machine de distribution agricole (100) selon l'une quelconque des revendications précédentes, **caractérisée en ce que** la section de fond (3) présente une zone partielle (3.1) avant inclinée en biais vers l'arrière en bas et le dispositif de génération d'écoulement (5) est réalisé sous la zone partielle (3.1) inclinée.

6. Machine de distribution agricole (100) selon la revendication 5, **caractérisée en ce que** la zone partielle (3.1) inclinée est inclinée d'au moins 30° par rapport à l'horizontale et/ou est réalisée afin de conduire au niveau de sa surface intérieure un produit de distribution vers le bas vers le dispositif de dosage (4).

7. Machine de distribution agricole (100) selon l'une quelconque des revendications précédentes, **caractérisée en ce que** la structure d'ouverture d'aspiration (6)
- est réalisée au moins par sections dans une zone partielle avant de la section de toit (2),
- est réalisée au moins par sections dans une zone partielle supérieure de la section de paroi avant (7), et/ou
- est réalisée au moins par sections dans une zone partielle avant et supérieure d'au moins une section de paroi latérale (8).

8. Machine de distribution agricole (100) selon l'une quelconque des revendications précédentes, **caractérisée en ce que** le canal d'aspiration (9)
- s'étend le long de la section de paroi avant (7),
- se rétrécit vers le dispositif de génération d'écoulement (5), et/ou
- s'étend dans un contour intérieur du réservoir (1).

9. Machine de distribution agricole (100) selon l'une quelconque des revendications précédentes, **caractérisée en ce que** le réservoir (1) présente une zone de réception (1.1) pour le stockage du produit de distribution et la zone de réception (1.1) est séparée par une paroi de séparation (11) du canal d'aspiration (9) et/ou de la structure d'ouverture d'aspiration (6).

10. Machine de distribution agricole (100) selon l'une quelconque des revendications précédentes, **caractérisée en ce que** la section de toit (2) s'étend au-dessus du canal d'aspiration (9) et s'étend de préférence au-dessus de la zone de réception (1.1).

11. Machine de distribution agricole (100) selon l'une quelconque des revendications précédentes, **caractérisée en ce que** le réservoir (1) dans la zone de la structure d'ouverture d'aspiration (6) présente une largeur entière dans le sens de largeur (B) de la machine de distribution agricole (100) et la structure d'ouverture d'aspiration (6) s'étend sur au moins 50 %, au moins 75 % ou au moins 90 % de la largeur entière.

12. Machine de distribution agricole (100) selon l'une quelconque des revendications précédentes, **caractérisée en ce que** le dispositif de dosage (4) et/ou le dispositif de génération d'écoulement (5)
- est agencé derrière la section de paroi avant (7),
- est agencé en dehors du réservoir (1), et/ou
- est agencé sous la section de fond (3).

13. Machine de distribution agricole (100) selon l'une quelconque des revendications précédentes, **caractérisée en ce qu'**un dispositif d'éclairage de côté arrière (12) est intégré dans le réservoir (1) et de préférence, le dispositif d'éclairage de côté arrière (12) ne dépasse pas sensiblement d'un contour extérieur du réservoir (1).

14. Machine de distribution agricole (100) selon l'une quelconque des revendications précédentes, **caractérisée en ce que** le dispositif de dosage (4) présente au moins un rotor à cellule pour le dosage volumétrique du produit de distribution et le dispositif de génération d'écoulement (5) est relié au moyen d'une conduite d'air de transport (10) s'étendant sous la section de fond (3) au dispositif de dosage (4) afin de recevoir un produit de distribution dosé par le dispositif de dosage (4) et de le transporter encore à l'aide du courant d'air de transport.

15. Machine de distribution agricole (100) selon l'une quelconque des revendications précédentes, **caractérisée en ce que** la machine de distribution agricole (100) présente au moins une tour de distribution (20) pour la distribution du produit de distribution dosé par le dispositif de dosage (4) à une pluralité de socs de semoir (30) et le dispositif de génération d'écoulement (5) est réalisé pour la génération d'un écoulement d'air de transport afin de transporter du produit de distribution dosé par le dispositif de dosage (4) vers l'au moins une tour de distribution (20) et de l'au moins une tour de distribution (20) vers la pluralité de socs de semoir (30).

16. Machine de distribution agricole (100) selon l'une quelconque des revendications précédentes, **caractérisée en ce que** le dispositif de dosage est réalisé pour la séparation du produit de distribution et le dispositif de génération d'écoulement (5) sert à la génération d'une pression différentielle pour la séparation du produit de distribution.
